# EUROPEAN PATENT APPLICATION

(11) **EP 4 595 761 A1**
(43) Date of publication of application: **06.08.2025**
(21) Application number: 25152552.3
(22) Date of filing: 17.01.2025
(51) Int. Cl.: A23B 2/80, A23L 23/00

(54) **FROZEN PRODUCT INCLUDING SOURCE AND GARNISH AND METHOD OF MANUFACTURING SAME**

(30) Priority: 31.01.2024 KR 20240015274
(71) Applicant: Farm&Dle, Inc., Seongnam-si, Gyeonggi-do 13202 (KR)
(72) Inventor: KIM, Jungho, 13599 Seongnam-si (KR)
(74) Representative: Zimmermann, Tankred Klaus

(57) **Abstract**

A frozen product according to an example embodiment of the present disclosure includes a frozen food composed of a source and a garnish, and a packaging material configured to package the frozen food. The frozen food includes a source layer composed of a frozen source; a garnish layer arranged on the source layer and composed of the garnish which are frozen integrally with the source layer. The packaging material is configured to integrally package the source layer and the garnish layer.

## Description

### TECHNICAL FIELD

The present disclosure relates to a frozen product including a source and a garnish, a method of manufacturing the same, and a frozen product manufacturing facility, and more particularly, to a frozen product which may be easily cooked to eco-friendly provide a food including a source and a garnish, a method of manufacturing the same, and a frozen product manufacturing facility.

### BACKGROUND

In general, a ready-to-cook product may be provided in a form of meal kit.

The meal kit refers to a convenience food which is sold uncooked and includes cleaned food ingredients and seasoning. The meal kit is a different concept from a home meal replacement (HMR).

The home meal replacement refers to a food that does not require cooking itself (a cleaned fruit, a cleaned salad, a canned food or the like), or a food such as a packed lunch which is underwent a basic cooking process and may be eaten through a minimal cooking process such as heating.

As described above, the meal kit requires such a cooking process. For this reason, in general, a recipe for explaining a process of cooking various food ingredients required for the ready-to-cook are provided together with the meal kit.

However, since the food ingredients required for the ready-to-cook are individually packaged and provided, packaging materials are wastefully discarded after cooking. This may cause inconvenience to consumers. In addition, when the food ingredients are individually packaged, an amount of food ingredients used during cooking may vary depending on the consumers. As a result, a taste of the cooked food may be different from its original taste. This may often negatively affect consumer's perception of the product. In addition, since a large amount of packaging materials is discarded, it may cause environmental issues.

### SUMMARY

The present disclosure was made for the purpose of solving the above matters, and the present disclosure is for the purpose of a frozen product which can be easily cooked to eco-friendly provide a food, a method of manufacturing the frozen product, and a frozen product manufacturing facility.

A frozen product according to an example embodiment of the present disclosure may include a frozen food including a source and a garnish, and a packaging material configured to package the frozen food. The frozen food may include a source layer composed of a frozen source, a garnish layer arranged on the source layer and composed of the garnish which are frozen integrally with the source layer. The packaging material may be configured to integrally package the source layer and the garnish layer.

In an aspect, the source layer may be configured to include a flat lower surface, a flat upper surface, and a side surface connecting the flat lower surface and the flat upper surface, and may be configured to have an overall flat shape.

In an aspect, the garnish layer may be arranged on the source layer in a state in which the source layer is partially frozen, the source layer and the garnish layer may be completely frozen integrally with each other, and the flat upper surface of the source layer may have a concave groove shape to partially receive a lower portion of the garnish.

In an aspect, the garnish layer may be arranged on the flat upper surface of the source layer, the garnish layer may be composed of a plurality of garnishes. Among the plurality of garnishes, a garnish which requires a shortest cooking time may be arranged on an uppermost portion of the garnish layer.

According to an example embodiment of the present disclosure, the frozen product may further include a packaging container configured to receive the frozen food which is packaged with the packaging material. The packaging material may be a transparent material, and at least a portion of an upper surface of the packaging container may be configured to be transparent such that the garnish layer of the frozen product is visually exposed.

Further, according to an example embodiment, of the present disclosure, the garnish layer may be arranged on the source layer in a state in which the source layer is partially frozen, the source layer and the garnish layer may be completely frozen integrally with each other, and the flat upper surface of the source layer may have a concave groove shape to partially receive a lower portion of the garnish, the frozen product may be Budae Jjigae.

According to another example embodiment of the present disclosure, a method of manufacturing a frozen product may include preparing a source in a liquid state, distributing the source to each of a plurality of containers, primarily freezing the source received in each of the plurality of containers, placing a garnish on the source which is primarily frozen, secondarily freezing the source and the garnish with the garnish placed on the source, and packaging a food composed of the source and the garnish which are secondarily frozen.

In an aspect, in the primarily freezing the source, the source may be primarily frozen such that at least a part of an upper portion of the source is not frozen to form a liquid source.

In an aspect, in the secondarily freezing the source and the garnish, the garnish and the source may be secondarily frozen such that both the garnish and the liquid source are frozen.

According to still another example embodiment, a frozen-product manufacturing facility may include a source tank configured to receive a source in a liquid state, a source filler configured to distribute the source to each of a plurality of containers, a first freezer configured to primarily freeze the source received in each of the plurality of containers, a garnish placement section configured to define a closed space and in which a garnish is placed on the source which is primarily frozen, a second freezer configured to secondarily freeze the source on which the garnish is placed, and a packaging machine configured to packaging a food composed of the source and the garnish which are secondarily frozen.

In an aspect, the first freezer may be a tunnel-type freezer, an internal temperature of the first freezer may be in a range of -18 °C to -20 °C, and a transfer speed of the container inside the first freezer may be in a range of 3 to 6 meter/minute.

In an aspect, the second freezer is a spiral-type freezer, an internal temperature of the second freezer may be -40 °C or less, and a transfer speed of the container inside the second freezer may be in a range of 3 to 6 meter/minute.

According to an example embodiment of the present disclosure, a source layer and a garnish layer are integrally frozen and integrally packaged by a single packaging material. Further, a source material and various garnish materials are not packaged by individual packaging materials. This may eliminate inconvenience to consumers and may significantly reduce an amount of packaging materials discarded, which is environmentally advantageous.

According to an example embodiment of the present disclosure, it is possible to cook a food by merely removing a packaging material of a frozen product of the present disclosure and heating the frozen product with a cooking appliance. Further, the source layer is first thawed and cooked, and the garnish layer (which requires a relatively short period of cooking time) are received in the thawed source layer. This may eliminate a need for a consumer to fully aware of a recipe. Thus, the consumer may achieve an original taste of the food in a relatively easy manner.

Further, according to an example embodiment of the present disclosure, the garnish layer composed of various garnishes is fully arranged on the source layer. Thus, the various garnishes may be exposed from a front side of the frozen product, which makes it possible to visually advantageously appeal to the consumer.

### BRIEF DESCRIPTION OF THE DRAWINGS

FIG. 1 is a photograph obtained by capturing a front side of a frozen product according to an example embodiment of the present disclosure.
FIG. 2 is a photograph obtained by capturing one side of the frozen product according to an example embodiment of the present disclosure.
FIG. 3 is a photograph obtained by capturing one side of the frozen product according to an example embodiment of the present disclosure, as viewed from another angle.
FIG. 4 is a photograph obtained by capturing a back side of the frozen product according to an example embodiment of the present disclosure.
FIG. 5 is a photograph obtained by capturing a state in which the frozen product according to an example embodiment of the present disclosure is placed on a cooking appliance with a packaging material removed.
FIG. 6 is a view illustrating an outer container of the frozen product according to an example embodiment of the present disclosure;
FIG. 7 illustrates a flowchart for sequentially explaining a method of manufacturing the frozen product according to an example embodiment of the present disclosure.
FIG. 8 is a view schematically illustrating main constituent elements of a frozen product manufacturing facility according to an example embodiment of the present disclosure.
FIG. 9 illustrates a layout of the frozen product manufacturing facility according to an example embodiment of the present disclosure.

### DETAILED DESCRIPTION

Hereinafter, preferred example embodiments of the present disclosure will be described in detail with reference to the accompanying drawings.

In order to clearly describe the present disclosure, detailed descriptions of parts irrelevant to the present disclosure will be omitted, and the same reference numerals will be given to the same constituent elements throughout the specification. Further, a shape and size of each constituent element illustrated in the drawings are arbitrarily illustrated for the sake of convenience in description, and hence the present disclosure is not necessarily limited to the shape and size illustrated. That is, it is to be understood that specific shapes, structures, and characteristics described herein may be modified from an example embodiment to another example embodiment without departing from the spirit and scope of the present disclosure. Positions or arrangements of individual constituent elements may also be modified without departing from the spirit and scope of the present disclosure. Therefore, the detailed description described below is not to be taken in a limiting sense, and the scope of the present disclosure is to be taken as covering the scope claimed by the appended claims and their equivalents.

When a part "comprise or includes" a constituent element through this specification, this means that the part may further include other constituent elements, rather than excluding other constituent elements, unless other stated.

Throughout this specification, a "frozen food" refers to a food made by freezing food ingredients such as source or garnishes and a "frozen product" refers to a product which further includes a packaging material for packaging the frozen food in addition to the frozen food.

Throughout this specification, the "source" should be interpreted to encompass liquid seasoning as well as the broth of a broth dish. A representative example of the frozen food of the present disclosure may be "Budae Jjigae." An example of the "source" used herein may be a broth of the Budae Jjigae. For example, the "source" herein may include the broth (brewis obtained by brewing a meat) to a seasoned broth.

Throughout this specification, the same reference numerals are assigned to the same or corresponding constituent elements.

In order to facilitate overall understanding of the present disclosure, a frozen product according to an example embodiment of the present disclosure first will be described and subsequently, a method of manufacturing the frozen product and a manufacturing facility therefor.

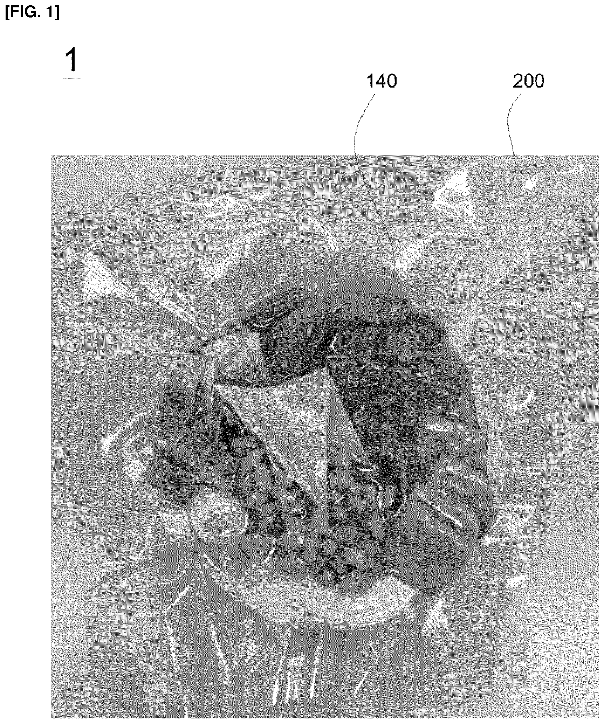

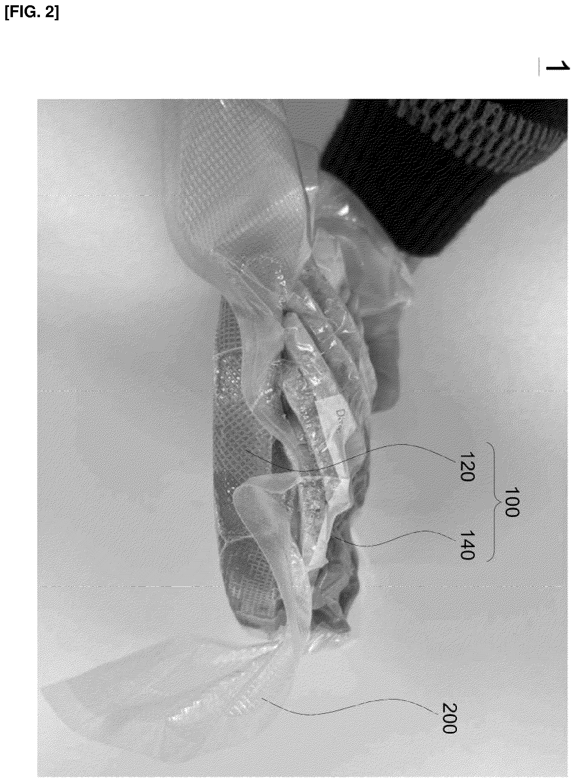

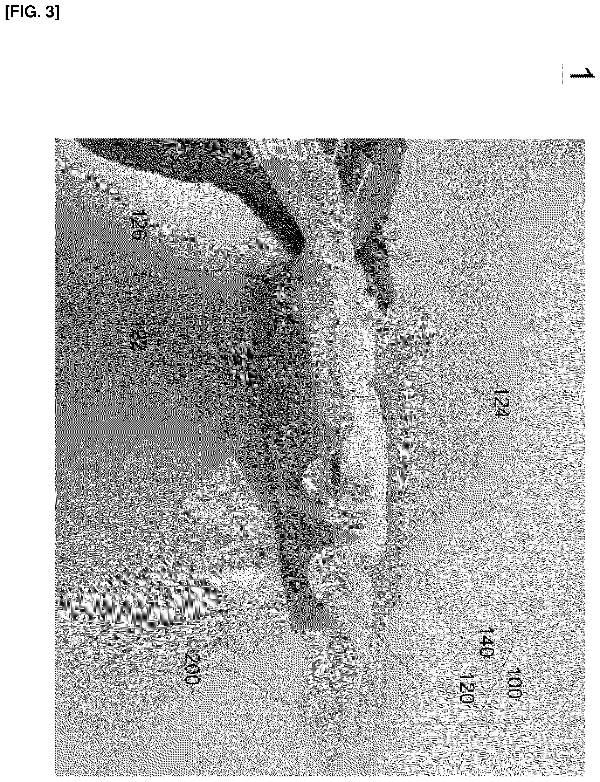

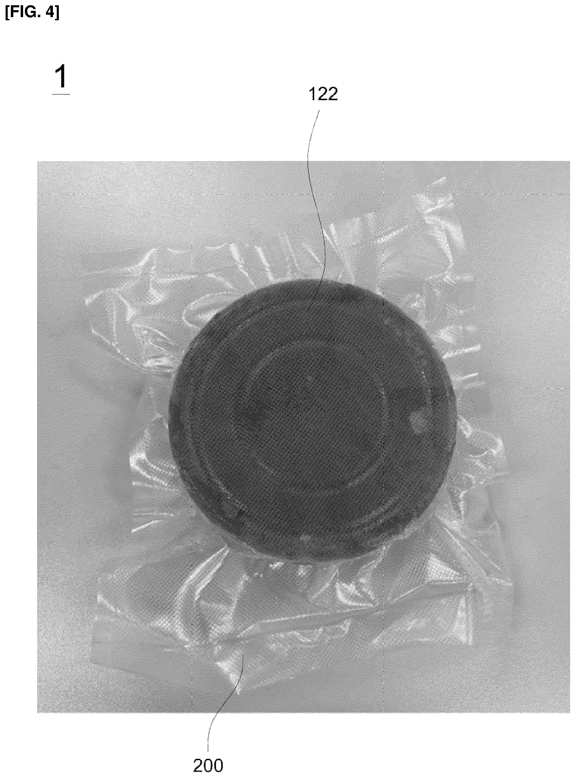

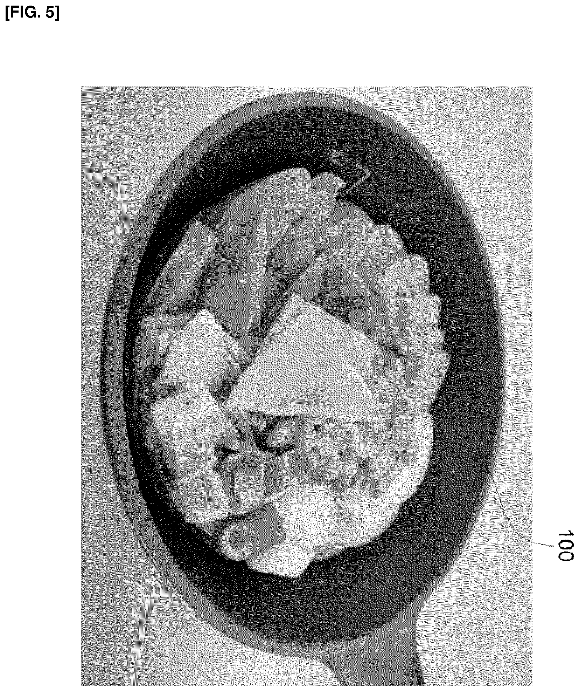

FIG. 1 is a photograph obtained by capturing a front side of the frozen product according to an example embodiment of the present disclosure. FIG. 2 is a photograph obtained by capturing one side of the frozen product according to an example embodiment of the present disclosure. FIG. 3 is a photograph obtained by capturing one side of the frozen product according to an example embodiment of the present disclosure, as viewed from another angle. FIG. 4 is a photograph obtained by capturing a back side of the frozen product according to an example embodiment of the present disclosure. FIG. 5 is a photograph obtained by capturing a state in which the frozen product according to an example embodiment of the present disclosure is placed on a cooking appliance with a packaging material removed.

As illustrated in FIGS. 1 to 5, a frozen product 1 according to an example embodiment of the present disclosure may be configured to include a frozen food 100 composed of a source and garnishes, and a packaging 200 for packaging the frozen food 100.

The frozen food 100 may include a source layer 120 composed of a frozen source, and a garnish layer 140 provided on the source layer 120 and composed of garnishes frozen integrally with the source layer 120. The packaging material 200 may be configured to integrally package the source layer 120 and the garnish layer 140.

As an example, the source layer 120 may have a flat circular lower surface 122, a flat circular upper surface 124, and a side surface 126 connecting the lower surface 122 and the upper surface 124. Thus, the source layer 120 may have a substantially flat cylindrical shape.

With this configuration, as illustrated in FIG. 5, when the frozen food 100 is placed on a cooking appliance, the source layer 120 is placed on a heating face of the cooking appliance (for example, a fan) via the flat circular lower surface 122 thereof. Thus, heat is radiated to the frozen food 100 via the lower surface 122 of the source layer 120. Further, as illustrated in FIGS. 1 to 4, the garnish layer 140 is placed on the upper surface 124 of the source layer 120 and remains frozen integrally with the source layer 120. Thus, the frozen food 100 (from which the packaging material 200 is removed) is heated and thawed by the cooking appliance. In an initial stage, the source layer 120, which is frozen, is thawed and boiled. At this time, the garnish layer 140 is heated relatively little. Thereafter, when the source layer 120 is completely thawed, the garnish layer 140 is received in the thawed source. As the thawed source is heated, the garnish layer 140 received in the source is also thawed and cooked.

This cooking process is particularly advantageous in seasoning the taste of the frozen food 100 including the source and the garnishes. In general, in a case of a food including the source and the garnishes (such as the Budae Jjigae illustrated herein), it is desirable to cook the food boil for a short period of time by boiling prepared source (broth in the case of the Budae Jjigae) for a certain period of time and subsequently adding the garnishes to the source. This is because the garnishes are more sensitive to taste than the source (that can't be chewed) and may be degraded in terms of taste when being cooked for a long period of time. In practice, a meal kit on the market in the related art is provided together with a recipe which describes an order of putting a source material and various garnish materials into a cooking appliance, timings of putting them into the cooking appliance and the like in a state in which the source material and the various garnish materials are individually packaged. Thus, in order to obtain an original taste of a food, a consumer needs to read the recipe and cook the food according to the recipe. This is inconvenient for the consumer.

However, in the frozen food 100 according to an example embodiment of the present disclosure, the source layer 120 is first thawed and cooked. At this time, the garnish layer 140 is not substantially cooked. As the source layer 120 is heated, the garnish layer 140 received in the source layer 120 is gradually thawed and cooked. With this cooking manner, the consumer may simply cook the frozen food 100 according to an example embodiment of the present disclosure by merely putting the frozen food 100 into the cooking appliance and heating the same without having to know the recipe, thereby obtaining a taste substantially similar to that when the consumer actually cooked the food.

Further, since the frozen product 1 according to an example embodiment of the present disclosure is provided with the garnish layer 140 placed on the source layer 120, it is also advantageous in terms of aesthetics and may advantageously visually appeal to the consumer.

For example, as illustrated in FIGS. 1 and 5, in the frozen product 1 according to an example embodiment of the present disclosure, the garnish layer 140 (which may appeal to the consumer) is fully placed on the source layer 120. Thus, the consumer may easily look at the frozen product 1 according to an example embodiment of the present disclosure to which various garnishes are exposed, which may advantageously visually appeal to the consumer.

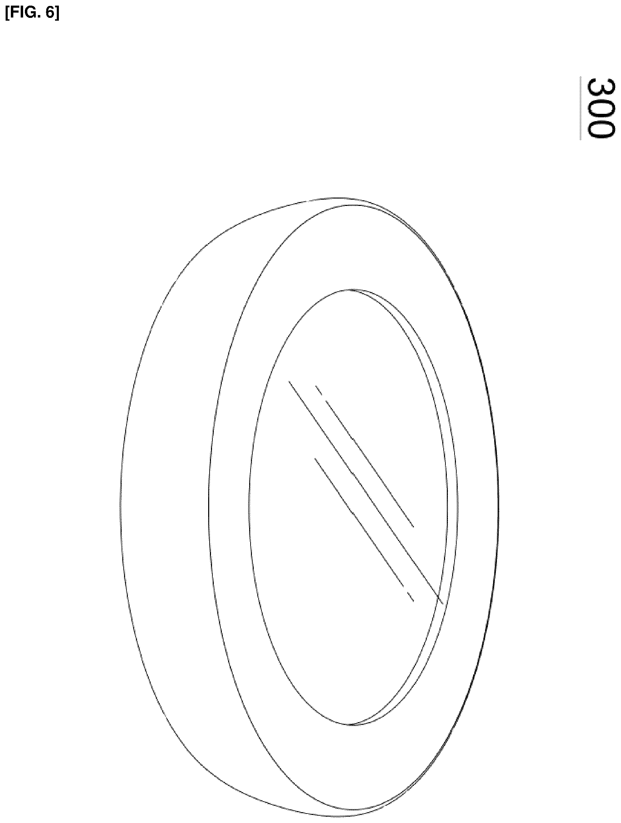

For example, the frozen product 1 according to an example embodiment of the present disclosure may be provided while being packaged with a packaging container 300 as illustrated in FIG. 6. The packaging container 300 may be made by, for example, a plastic material. An upper portion of the packaging container 300 is open and may be covered with a transparent vinyl. Thus, the garnish layer 140 of the frozen product 1 according to an example embodiment of the present disclosure are externally exposed via the transparent vinyl of the packaging container 300. Accordingly, the frozen product 1 according to an example embodiment of the present disclosure may visually appeal to the consumer to attract attention.

Further, according to an example embodiment of the present disclosure, the garnish layer 140 may be formed with various kinds of garnishes frozen. Such various kinds of garnishes may be arranged in consideration of at least one of a taste of cooked food, a visual appeal provided by the garnish layer, or the like. As an example, depending on the type of food, a short cooking time may be important for bringing out the taste of the food. In such a case, among the plurality of garnishes in the garnish layer 140, one that requires the shortest cooking time may be placed on the uppermost portion of the garnish layer 140. Further, among the plurality of garnishes in the garnish layer 140, one that requires the longest cooking time may be placed on the lowermost portion of the garnish layer 140.

Further, unlike a source material and various garnish materials are individually packaged as in the related art, in the frozen product 1 according to an example embodiment of the present disclosure, the source layer 120 and the garnish layer 140 may be configured to be integrally packaged by a single packaging material 200. This eliminates inconvenience of the consumer having to individually open packaging materials of the source material and the garnish materials, and significantly reduces an amount of packaging materials thrown away. This is environmentally desirable.

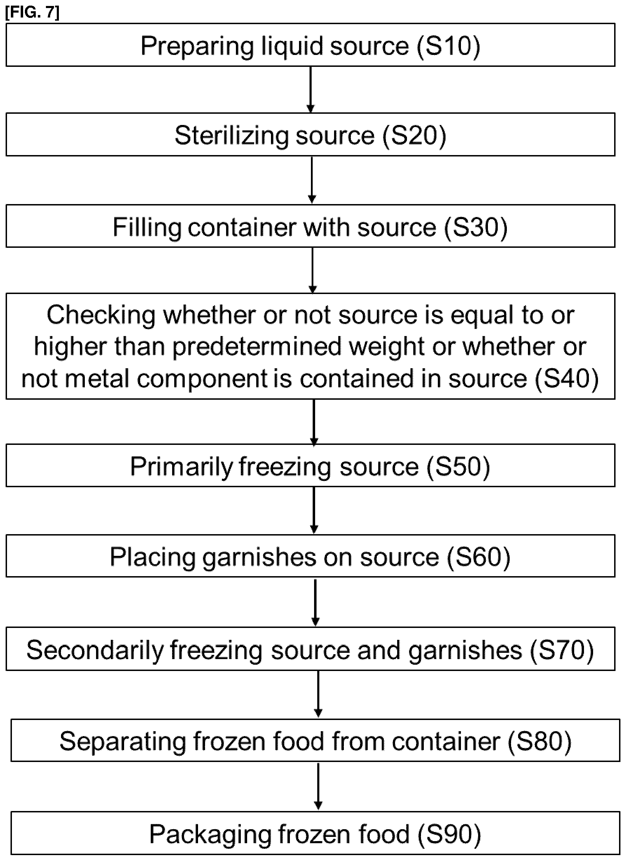

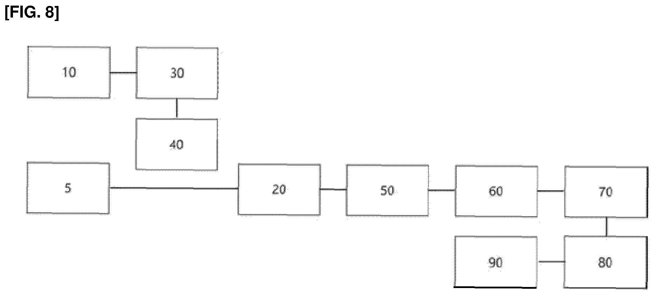

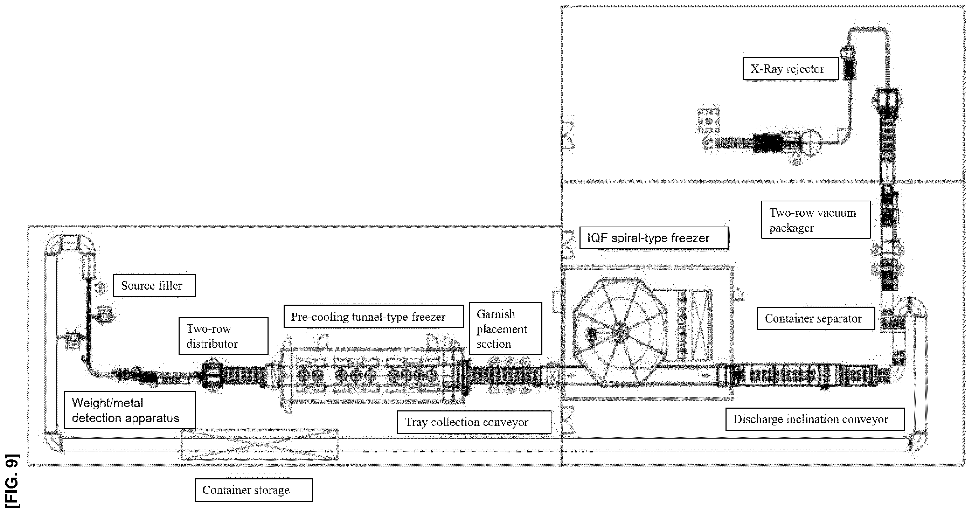

FIG. 7 illustrates a flowchart for sequentially explaining a method of manufacturing the frozen product according to an example embodiment of the present disclosure. FIG. 8 is a view schematically illustrating main constituent elements of a frozen product manufacturing facility according to an example embodiment of the present disclosure. FIG. 9 illustrates a layout of the frozen product manufacturing facility according to an example embodiment of the present disclosure.

As illustrated in FIG. 7, the method of manufacturing the frozen product according to an example embodiment of the present disclosure may include Operation S 10 of preparing a source in a liquid state, an Operation S20 of sterilizing the source, Operation S30 of distributing the source to each of a plurality of containers to fill each container with the source, Operation S40 of checking whether or not the source filled into the container is equal to or higher than a predetermined weight or whether or not a metal component is contained in the source filled into the container, Operation S50 of primarily freezing the source filled into the container, Operation S60 of placing garnishes on the source thus primarily frozen, Operation S70 of secondarily freezing the source and the garnishes with the garnishes placed on the source, Operation S80 of separating, from each container, a frozen food composed of the source and the garnishes thus secondarily frozen, and Operation S90 of packaging the frozen food thus frozen. Each operation will be described later.

Operation S10 is an operation of preparing the source in a liquid state. For example, Operation S 10 may be performed by a method of preparing a typical liquid source. For example, as illustrated in FIG. 8, the source may be prepared by supplying both a source material and water into a source tank 10, and stirring and heating them in the source tank 10.

Operation S20 is an operation of sterilizing the source. For example, Operation S20 may be performed by a typical sterilizer 30, specifically, a tubular sterilizer. For example, a source pipe which connects the source tank 10 and a source filler 40 may be configured to pass through the tubular sterilizer 30.

Operation S30 is an operation of distributing the source to each of the plurality of containers to fill each container with the source. As an example, as illustrated in FIGS. 8 and 9, a plurality of typical source fillers 40 may be arranged on one side along a conveyor to fill the source into each container transferred from a container feeder 5 via the conveyor.

Operation S40 is an operation of checking whether or not the source filled into the container is equal to or higher than a predetermined weight, or whether or not a metal component is contained in the source filled into the container. As an example, this operation may be performed using a typical weight/metal detection apparatus 20 for a conveyor. For example, the weight/metal detection apparatus 20 may be configured to measure weights of individual containers being transferred along a previously-installed conveyor to sort a container whose weight of the source filled thereinto does not meet a predetermined criterion. The weight/metal detection apparatus 20 may be configured to include a measurement stopper, a weight meter and a sorter. The weight meter measures a weight of each container by lifting the container stopped at the measurement stopper from the conveyor. The sorter sorts the container according to a weight measurement result obtained by the weight meter.

The metal detection apparatus may be configured to detect whether or not a metallic foreign matter is contained in the container to sort the container having such a metallic foreign matter to a separate space. The metal detection apparatus may include a detector configured to detect whether or not a metallic foreign matter is contained in the container and a sorter configured to move the container having the metallic foreign matter to the separate space.

Operation S50 is an operation of primarily freezing the source received in the container. Operation S50 may be performed to freeze the source received in the container.

According to an example embodiment of the present disclosure, the source and the garnishes may be frozen in separate operations (as will be described later). More specifically, the source is primarily frozen in a first freezer 50. Subsequently, the garnishes are placed on the primarily-frozen source. In this state, the source and the garnishes are transferred to a second freezer 70 where they are secondarily frozen.

In the primarily freezing, preferably, the source received in the container may be "partially frozen". In this specification, the expression "partially frozen" means a state in which the source received in the container is not fully frozen but unfrozen broth exists in at least an upper portion of the source received in the container.

In the present disclosure, one of technical reasons why the source and the garnishes are separately frozen through the primary freezing operation and the secondary freezing operation is to freeze the garnishes in a state in which they are placed on the frozen source. Thus, the above-described object of the present disclosure may be achieved as long as the source is partially frozen and the garnishes are placed on the partially-frozen source without being received inward of the partially-frozen source. Further, in the state in which the source is partially frozen, the garnishes are less likely to slide on the upper surface of the source layer (compared to a case in which the upper surface of the source layer is completely frozen). This is more advantageous in placing the garnishes.

A tunnel-type freezer or a spiral-type freezer may be used as the freezer. In the present disclosure, as an example, the tunnel-type freezer may be used as the first freezer 50 for primary freezing, and the spiral-type freezer may be used as the second freezer 70 for secondary freezing. The garnishes need to be rapidly frozen to suppress a loss of moisture. The spiral-type freezer may be more suitably used for such a rapid freezing.

The tunnel-type freezer applied to the present disclosure may be a typical tunnel-type freezer. For example, the tunnel-type freezer may include an extension tunnel configured such that a conveyor extends inward of the extension tunnel, a chiller configured to generate a low-temperature gas, and a fan configured to induce turbulence inside the extension tunnel.

In the present disclosure, in order to implement "partial freezing," a transfer speed and an internal temperature of a container provided inside the first freezer may be adjusted. For example, the transfer speed of the container may be in a range of 3 to 6 meter/minute, and the internal temperature of the container may be in a range of -18 to -20 °C.

Operation S60 is an operation of placing the garnishes on through-hole source which is primarily frozen. In Operation S60, after the container in which the source is frozen or partially frozen is introduced into a garnish placement section 60 along the conveyor, the garnishes are placed on the source (broth) which is frozen or partially frozen. Preferably, the garnish placement section 60 may be configured as a closed space for sanitation.

Operation S70 is an operation of secondarily freezing the source on which the garnishes are placed. Operation S70 may be performed to secondarily freeze the source on which the garnishes are placed.

As mentioned above, the second freezer 70 used for the secondarily freezing may be the spiral-type freezer. The spiral-type freezer applied to the present disclosure may be a typical spiral-type freezer (a freezer in which the food is frozen while moving along a spiral disc).

Since the secondarily freezing is performed in the state in which the garnishes are placed, the rapid freezing may be preferably employed. In order to implement the rapid freezing, the transfer speed and the internal temperature of the container provided inside the second freezer 70 may be adjusted. For example, the transfer speed of the container may be in a range of 3 to 6 meter/minute, and the internal temperature of the container may be -40 °C or less.

Operation S80 is an operation of separating the frozen food from the container. In Operation S80, the frozen food may be separated by a typical container separation apparatus 80. For example, the frozen food may be separated from the container by slightly heating the container.

Operation S90 is an operation of packaging the frozen food composed of the source and the garnishes which are secondarily frozen. Operation S90 may be performed by packaging the frozen food in a vacuum environment using a typical vacuum packaging apparatus. For example, a vacuum packaging apparatus 90 may include a vacuum chamber. When an interior of the vacuum chamber is in a vacuum state, the frozen food 100 may be vacuum-packaged with a packaging material 200 while hermetically sealing the packaging material 200. In the present disclosure, the packaging material 200 may be a transparent material. This is because the frozen product 1 according to an example embodiment of the present disclosure is aesthetically appealing.

FIG. 8 is a view schematically illustrating main constituent elements of a frozen product manufacturing facility according to an example embodiment of the present disclosure. As illustrated in FIG. 8, the frozen product manufacturing facility according to an example embodiment of the present disclosure may be configured to include at least the container feeder 5, the source tank 10, the weight/metal detection apparatus 20, the tubular sterilizer 30, the source filler 40, the first freezer 50, the garnish placement section 60, the second freezer 70, the container separation apparatus 80, the vacuum packaging apparatus 90.

In FIG. 8, the source tank 10, the sterilizer 30, the source filler 40 are sequentially connected to a pipe. The source in a liquid state is transferred from the source tank 10 to the sterilizer 30 and the source filler 40 via the pipe. In FIG. 8, the container feeder 5, the weight/metal detection apparatus 20, the first freezer 50, the garnish placement section 60, the second freezer 70, the container separation apparatus 80, the vacuum packaging apparatus 90 may be connected to the conveyor. With this configuration, the containers supplied from the container feeder 5 may be sequentially transferred to the above-described constituent elements along the conveyor.

FIG. 9 illustrates a layout around the conveyor of the frozen product manufacturing facility according to an example embodiment of the present disclosure. In the layout, there are illustrated constituent elements which may be applied when actually implementing the frozen product manufacturing facility (for example, a two-row distributor, a discharge inclination conveyor, an X-RAY rejector, and the like). However, the present disclosure is not limited thereto, but these constituent elements are merely examples.

While preferred example embodiments of the present disclosure have been described above, the present disclosure may be implemented by not only the above-described example embodiments but also another example embodiments and their equivalents which may be easily changed by those skilled in the art to which the present disclosure pertains.

### EXPLANATION OF REFERENCE NUMERALS

1: Frozen product
5: Container feeder
10: Source tank
20: Weight/metal detection apparatus
30: Sterilizer
40: Source filler
50: First freezer
60: Garnish placement section
70: Second freezer
80: Container separation apparatus
90: Vacuum packaging apparatus
100: Frozen food
120: Source layer
122: Lower surface
124: Upper surface
126: Side surface
140: Garnish layer
200: Packaging material
300: Packaging container

## Claims

1. A frozen product comprising:
a frozen food including a source and a garnish; and
a packaging material configured to package the frozen food,
wherein the frozen food is a broth-cooked product,
wherein the frozen food includes:
a source layer composed of a frozen source;
a garnish layer arranged on the source layer and composed of the garnish which are frozen integrally with the source layer,
wherein the packaging material is configured to integrally package the source layer and the garnish layer, and
wherein the frozen food is configured to be cooked as the broth-cooked product by heating without additionally supplying water.

2. The frozen product of Claim 1, wherein the source layer is configured to include a flat lower surface, a flat upper surface, and a side surface connecting the flat lower surface and the flat upper surface, and configured to have an overall flat shape.

3. The frozen product of Claim 2, wherein the garnish layer is arranged on the source layer in a state in which the source layer is partially frozen, and the source layer and the garnish layer are completely frozen integrally with each other, and
wherein the flat upper surface of the source layer has a concave groove shape to partially receive a lower portion of the garnish.

4. The frozen product of Claim 2, wherein the garnish layer is arranged on the flat upper surface of the source layer,
wherein the garnish layer is composed of a plurality of garnishes, and
wherein, among the plurality of garnishes, a garnish which requires a shortest cooking time is arranged on an uppermost portion of the garnish layer.

5. A method of manufacturing the frozen product of any one of Claims 1 to 4, the method comprising:
preparing a source in a liquid state;
distributing the source to each of a plurality of containers;
primarily freezing the source received in each of the plurality of containers;
placing a garnish on the source which is primarily frozen;
secondarily freezing the source and the garnish with the garnish placed on the source; and
packaging a food composed of the source and the garnish which are secondarily frozen.

6. The method of Claim 5, wherein in the primarily freezing the source, the source is primarily frozen such that at least a part of an upper portion of the source is not frozen to form a liquid source.
